# EUROPÄISCHE PATENTSCHRIFT

(11) **EP 0 759 867 B1**
(45) Veröffentlichungstag und Bekanntmachung des Hinweises auf die Patenterteilung: **21.07.1999**
(21) Anmeldenummer: 96906736.2
(22) Anmeldetag: 05.03.1996
(51) Int. Cl.: B61D 17/18, B60R 13/02

(54) **PERSONENZUGWAGEN MIT EINEM ISOLIERTEN WANDUNGSELEMENT**
PASSENGER TRAIN WAGON WITH AN INSULATED WALL ELEMENT
VOITURE A VOYAGEURS AVEC ELEMENT DE PAROI ISOLE

(30) Priorität: 17.03.1995 DE 19509676
(43) Veröffentlichungstag der Anmeldung: 05.03.1997
(73) Patentinhaber: ABB Daimler-Benz Transportation (Technology) GmbH, 13627 Berlin (DE)
(72) Erfinder: BENGESSER, Ulrike, D-73102 Birenbach (DE); KÖPPEL, Klaus, D-86663 Bäumenheim (DE); BREHM, Reiner, D-90411 Nürnberg (DE); WEBER, Oliver, D-90613 Groshabersdorf (DE)
(74) Vertreter: Breiter, Achim, Dipl.-Ing.
(86) Internationale Anmeldenummer: EP9600909
(87) Internationale Veröffentlichungsnummer: WO9629225

(56) Entgegenhaltungen:
- EP-A- 0 105 962
- US-A- 4 899 797

## Beschreibung

Die Erfindung betrifft einen Personenzugwagen gemäß dem Oberbegriff des ersten Anspruchs.

Es ist bei Personenzugwagen ganz allgemein bekannt, den Fahrgastraum umschließende Wandungselemente aus Profilplatten aufzubauen, die vorzugsweise im Aluminiumstrangpreßverfahren mit Hohlkammern zwischen zwei Wandflächen hergestellt sind. Auf einer Seitenfläche der Profilplatten sind Haltestifte festgesetzt, die eine die Wageninnenfläche überdeckende Isolierschicht zur Wärme- und/oder Geräuschdämmung halten. Die Haltestifte sind dabei mit einem scheibenförmigen Fuß versehen, der auf die betreffende Seitenfläche der Wandprofilplatten aufgeklebt ist. Klebeflächen erfordern jedoch eine intensive Vorbehandlung zur Erzielung reiner Klebeflächen und eine ausreichend lange Andrückzeit für ein hinreichendes Aushärten des Klebstoffs.

Der Erfindung liegt die Aufgabe zugrunde, bei einem Personenzugwagen gemäß dem Oberbegriff des ersten Anspruchs Maßnahmen zu treffen, durch welche eine vereinfachte Montage der Haltestifte ermöglicht wird.

Die Lösung dieser Aufgabe erfolgt gemäß der Erfindung durch die kennzeichnenden Merkmale des ersten Anspruchs. Vorteilhafte Ausgestaltungen der Erfindung sind in den weiteren Ansprüchen angegeben.

Bei einer Ausgestaltung eines Personenzugwagens gemäß der Erfindung wird an der Profilplatte auf der mit der Isolierschicht zu versehenden Seitenfläche ein langgestrecktes Haltestegprofil vorgesehen, an dem der bzw. eine Vielzahl von Haltestiften festgesetzt werden kann. Das Haltestegprofil kann dabei an einer nachträglich auf die betreffende Seitenfläche der Profilplatte durch Schrauben, Nieten, Kleben oder dergl. festgesetzte Leiste ausgebildet sein. Das Haltestegprofil kann jedoch vorzugsweise einstückig an die Profilplatte beim Strangpreßvorgang angeformt werden, wodurch zusätzliche Haltemittel entfallen. Am Haltestegprofil kann der Haltestift mittels einer Schnappverbindung festgesetzt sein. Hierzu weist das Haltestegprofil insbesondere einen nach Art eines T oder C gestalteten Querschnitt auf, während der Haltestift mit einem jeweils gegengleich gestalteten Fuß versehen ist, der demnach im Querschnitt ein C- oder T-förmiges Gegenprofil aufweist. Um eine stabile Halterung zu gewährleisten, besteht das Haltestegprofil aus zwei mit beachtlichem Abstand parallel zueinander verlaufenden Winkelleisten, deren Abstand etwa der halben Höhe des Haltestifts entspricht und deren freie Schenkel parallel zur Seitenfläche der Profilplatte und dabei entweder voneinander weg oder aufeinander zu weisen. Der Haltefuß des Haltestifts ist entsprechend breit ausgebildet und weist an gegenüberliegenden Rändern eines Brückensteges ebenfalls Winkelstege auf, deren freie Schenkel gegengleich zu denen des Haltestegprofils gerichtet sind und dieselben formschlüssig hintergreifen. Dabei ist insbesondere der Fuß des Haltestifts elastisch ausgebildet, so daß durch elastische Verformung die einen freien Schenkel hinter die anderen freien Schenkel geschnappt werden können. Zur Erleichterung des Zusammenfügens sind die Enden der freien Schenkel mit Anlaufschrägen versehen. Um das Spiel senkrecht zur Seitenfläche der Profilplatte, also in Zusammensteckrichtung dieser Schnappverbindung gering zu halten, können an die Winkelleisten verformbare Laschen angespritzt werden, die sich elastisch am jeweils anderen Teil abstützen. Der Haltestift kann im übrigen mit seinem Fuß einstückig ausgebildet sein und vorzugsweise aus elastischem Kunststoff bestehen, der insbesondere glasfaserverstärkt ist.

Bei C-förmiger Gestaltung des Haltestegprofils ist es zweckmäßig, dem Haltefuß einen im wesentlichen pilzförmigen Querschnitt zu geben, bei dem die außen auf den aufeinander zuweisenden Schenkeln des Haltestegprofils aufsitzenden Fußvorspannlaschen so geneigt sind, daß ihre freien Außenkanten auf den Schenkeln aufliegen, während am in das Haltestegprofil eintauchenden Fußstiel Fußspreizlaschen angeformt sind, die zu den Fußvorspannlaschen hin zurücklaufen und sich innen an den Schenkeln kraftschlüssig abstützen. Hierzu sind die gegenüber der Längsachse des Haltestifts mit relativ geringer Neigung schräggestellten Spreizlaschen so lang ausgebildet, daß im uneingebauten Ausgangszustand ihre freien Außenkanten in einer Ebene liegen, die von der parallel dazu verlaufenden, die freien Außenkanten der Fußvorspannlaschen aufnehmenden Ebene einen Abstand aufweist, der kleiner als die Dicke der Schenkel des Haltestegprofils ist. Beim Eindrücken des Haltefußes in das C-Haltestegprofil können dadurch die Fußvorspannlaschen aus ihrer geneigten Lage in eine plane Ebene gedrückt werden, so daß die in den Hohlraum des C-Haltestegprofils eingedrückten Spreizlaschen sich seitlich aufspreizen können und hinter die Innenseitenflächen der aufeinander zuweisenden Schenkel des Haltestegprofils schnappen können. Nach dem Einsteckvorgang federn dann die Vorspannlaschen aus ihrer niedergedrückten Lage zurück und ziehen die Spreizlaschen kraftschlüssig gegen die Innenseiten der Schenkel. Die Haltestifte sind dadurch klapperfrei und örtlich arretiert reibschlüssig festgesetzt.

Die Erfindung ist nachfolgend anhand von Skizzen eines Ausführungsbeispiels näher erläutert.

Es zeigen:

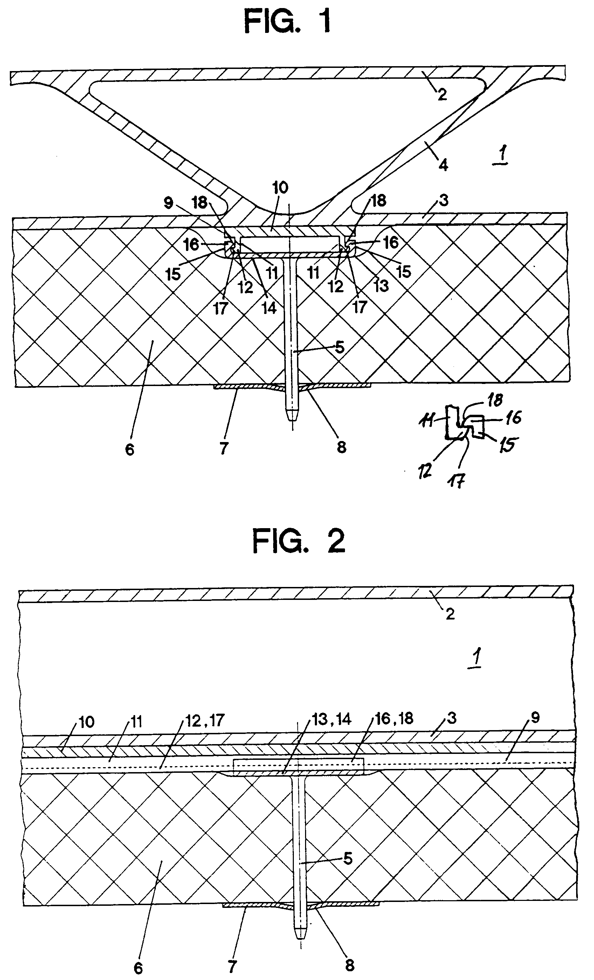

- Fig. 1: ein Wandungselement für einen Personenzugwagen im Querschnitt
- Fig. 2: einen Längsschnitt durch die Anordnung nach Fig. 1,

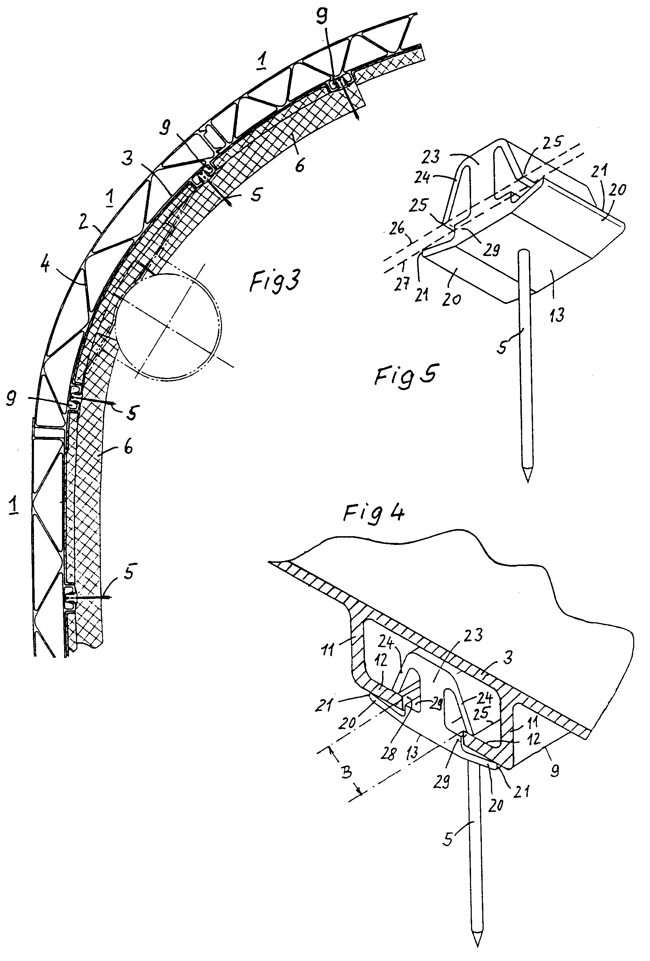

- Fig. 3: einen aus mehreren Wandungselementen zusammengesetzten Wandungsabschnitt, an dem Haltestifte an C-förmigen Haltestegprofilen festgesetzt sind,
- Fig. 4: eine vergrößerte perspektivische Ansicht der Ausführungsform nach Fig. 3 im Bereich eines Haltestifts und
- Fig. 5: einen Haltestift mit Haltefuß im uneingebauten Ausgangszustand.

Ein nicht näher dargestellter Personenzugwagen weist Wandungselemente auf, die den Fahrgastraum nach außen abschließen. Die Wandungselemente bestehen dabei aus planen oder gewölbten Profilplatten 1, bei welchen zwischen zwei im wesentlichen parallel zueinander verlaufenden äußeren und inneren Wandflächen 2,3 vorzugsweise zickzack-förmige Stützstege 4 vorgesehen sind. Derartige Profilplatten 1 werden vorzugsweise im Strangpreßverfahren aus Aluminiumlegierungen hergestellt. Das Wandungselement ist zusätzlich vorliegend an seiner inneren Wandfläche 3 mit einem Haltestift 5 bestückt, auf dem eine Isolierschicht 6 in Form einer Isoliermatte mit wärmedämmenden und/oder geräuschdämmenden Eigenschaften aufgesteckt ist. Zur Halterung einer großflächigen Isolierschicht 6 dienen mehrere über das Wandungselement 1 verteilt angeordnete Haltestifte 5. Zur Sicherung der Isolierschicht 6 ist auf das freie, angespitzte Ende des jeweiligen Haltestifts 5 eine großflächige Stützscheibe so aufgesteckt, daß die Isolierschicht 6 in ihrer Sollposition sicher gehalten ist. Die Stützscheibe 7 ist mit federnden Spreizlaschen 8 versehen, die den Haltestift 5 radial umgeben und entgegen der Aufschubrichtung, also zum freien Ende des Haltestifts 5 hin geneigt sind.

Um insbesondere mehrere Haltestifte in einfacher Weise an der Profilplatte 1 festsetzen zu können, trägt sie auf ihrer der Isolierschicht 6 zugewandten Seitenfläche 3 mindestens ein langgestrecktes Haltestegprofil 9, das sich zumindest annäherend über die Länge der Profilplatte 1 erstreckt und dabei parallel zur Längsrichtung der Stützstege 4 verläuft. Das Haltestegprofil 9 kann dabei als eigenständiges Strangpressprofil ausgebildet sein, das nachträglich auf der Seitenfläche 3 durch Schrauben, Nieten, Kleben oder dergl. festgesetzt wird. Vorzugsweise ist das Haltestegprofil jedoch bei der Herstellung der Profilplatte 1 einstückig mit angepreßt. Das Haltestegprofil 9 besteht dabei aus einer Basisplatte 10, die bei einstückiger Verbindung mit der Profilplatte 1 identisch mit der Seitenfläche 3 ist. Sie liegt dann ebenengleich mit der Seitenfläche 3 bzw. ist Teil derselben. Auf der Basisplatte 10 stehen zur Isolierschicht 6 hin Winkelleisten 11, deren einer Schenkel senkrecht auf der Basisplatte 10 steht und deren freie Schenkel 12 voneinander wegweisen. Die Winkelleisten 11 bilden so einen Querschnitt in der Art eines T, bei dem vorliegend der Mittelsteg geteilt und die dadurch gebildeten Winkelleisten 11 mit Abstand parallel zueinander verlaufen. Der Haltestift 5 ist mit einem gegengleichen, nach Art eines C im Querschnitt gestalteten Fuß 13 versehen, der ein angepaßtes, formschlüssig einrastendes Gegenprofil aufweist. Der Fuß 13 des Haltestifts 5 ist dabei durch einen parallel zur benachbarten Seitenfläche 3 der Profilplatte 1 liegenden Brückensteg 14 gebildet, der an gegenüberliegenden Rändern mit Winkelstegen 15 versehen ist, deren freie Schenkel 16 gegengleich zu denen der Winkelleisten 11 gerichtet sind. Der Brückensteg 14 besteht dabei aus elastischem Material und insbesondere aus Kunststoff, der vorzugweise glasfaserverstärkt ist. Durch elastisches Aufweiten des C-förmigen Profils des Fußes 13 können seine freien Schenkel 16 über die freien Schenkel 12 der Winkelleisten 11 geschnappt werden, so daß die freien Schenkel 16 des Brückensteges 14 jeweils in dem durch die freien Schenkel 12 des Haltestegprofils 9 gebildeten Hinterschnittraum zwischen der Basisplatte 10 und den freien Schenkel 12 zu liegen kommen. Die dadurch gebildete Verhakung stellt eine sichere Halterung des Haltestifts 5 am Haltestegprofil dar, wobei der Haltestift 5 in axialer Richtung des Haltestegprofils an beliebiger Stelle aufgeschnappt oder an beliebige Stelle verschoben werden kann. Eine Korrektur der Position des Haltestifts 5 ist dadurch jederzeit durch einfaches Verschieben möglich.

Selbstverständlich ist es auch möglich, die freien Schenkel 12 an der Basisplatte 10 aufeinander zuzurichten, so daß das Haltestegprofil C-förmig ist. Dann brauchen die freien Enden 16 bei entsprechend verkleinerter Breite des Brückensteges 14 ebenfalls nur um 180 Grad nach außen weisend ausgebildet werden, so daß der Fuß 13 ein im wesentlichen T-förmiges angepaßtes Gegenprofil aufweist Um das Zusammenschnappen des Haltestegprofils mit dem Gegenprofil des Haltestifts zu vereinfachen, sind deren freie Schenkel 12,16 mit Anlaufschrägen 17 bzw. 18 versehen, die beim Aufschnappen aufeinandertreffen und das seitliche elastische Ausbiegen der Winkelstege 15 selbsttätig bewerkstelligen. An die Winkelstege 15 können am Übergang zu den Schenkeln 16 noch elastisch verformbare Laschen angeformt werden, die dann, wenn der Fuß 13 auf das Haltestegprofil 9 aufgeschnappt ist, sich auf der Basisplatte 10 elastisch abstützt und die Schenkel 12,16 klapperfrei in Eingriff halten. Im übrigen ist der Haltestift 5 vorzugsweise mit seinem Fuß 13 einstückig verbunden, was insbesondere bei der Herstellung aus Kunststoff in einfacher Weise möglich ist.

Bei C-förmiger Gestaltung des Haltestegprofils 9 bewährt sich insbesondere ein Haltefuß für den Haltestift 5, der im wesentlichen einen pilzförmigen Querschnitt aufweist, bei dem der Pilzkopf die aufeinander zuweisenden Schenkel 12 des Haltestegprofils 9 auf der freien Außenseite übergreift und dabei Fußvorspannlaschen 20 aufweist, deren freie Außenkanten 21 auf den Außenseiten der Schenkel 12 unter Druck aufsitzen. Der Haltefuß 13 greift dabei mit einem Fußstiel 23 zwischen den Schenkeln 12 in den freien Raum innerhalb des Haltestegprofils 9 hinein und ist mit Fußspreizlaschen 24 versehen, die vom freien Ende des Fußstiels 23 zurück zur jeweils zugeordneten Fußvorspannlasche 20 laufen und sich auf der Innenseite der Schenkel 12 abstützen. Die Fußvorspannlaschen 20 sind von ihrem mittleren Bereich aus zu ihren freien Außenkanten 21 hin gegenüber der Längsachse des Haltestifts 5 so geneigt, daß sie zu der die Schenkel 12 aufnehmenden Ebene hin abfallen. Die Neigung der Fußvorspannlaschen 20 beträgt etwa 75 bis 85 Winkelgrade, vorzugsweise 80 Winkelgrade gegenüber der Längsachse des Haltestifts 5. Die Breite des Fußstiels ist im Bereich der dort vorgesehenen Ansatzstellen der Fußspreizlaschen kleiner als die lichte Breite B des Schlitzes zwischen den Winkelstegen 11,12, wobei die gegenüberliegend angesetzten Spreizlaschen 24 unter einem Winkel von etwa 15 bis 30 Winkelgraden, vorzugsweise 22,5 Winkelgraden gegenüber der Längsachse des Haltestifts 5 vom Fußstiel 23 so nach außen geneigt sind, daß die freien Endkanten 25 die Innenseiten der Schenkel 12 hintergreifen. Um hierbei einen kraftschlüssigen bzw. reibschlüssigen Sitz zu erreichen, der dauerhaft eine klapperfreie Halterung gewährleistet, sind die Außenkanten 21 der Fußvorspannlaschen 20 und die Endkanten 25 der Spreizlaschen 24 so angeordnet, daß sie im uneingebauten Ausgangszustand gemäß Fig. 5 in parallel zueinander verlaufenden Ebenen 26 bzw. 27 verlaufen, deren Abstand kleiner als die Materialdicke der Schenkel 12 des Haltestegprofils 9 ist. Beim Eindrücken des mit dem Haltestift 5 versehenen Haltefußes 13 in das Haltestegprofil 9 werden die Fußspreizlaschen 24 von den aufeinander zuweisenden schmalen Längskanten 28 der Schenkel 12 zum Fußstiel 23 gebogen. Gegen Ende der Einschubbewegung kommen die Außenkanten 21 der Fußvorspannlaschen 20 in Auflage auf die Außenseiten der Schenkel 12, wobei sich die Endkanten 25 der Fußspreizlaschen 24 noch zwischen den Längskanten 28 des Haltestegprofils 9 befinden. Durch weiteres Eindrücken des Fußstiels 23 senken sich die schräg auf den Schenkeln 12 aufsitzenden Fußvorspannlaschen 20 auch im mittleren Bereich auf die Außenseite der Schenkel 12 unter elastischer Verformung ab, so daß dann die Endkanten 25 aus dem Wirkungsbereich der Längskanten 28 gelangen und die Fußspreizlaschen 24 durch seitliches Auffedern in die Ausgangslage hinter die Innenflächen der Schenkel 12 schnappen können. Bei Entlastung des Haltefußes 13 ziehen die mechanisch vorgespannten Fußvorspannlaschen 20 den Fußstiel 23 nach außen, so daß die Endkanten 25 der Fußspreizlaschen 24 unter mechanischem Druck auf den Innenflächen der Stege 12 ebenso wie die Außenkanten 21 der Fußvorspannlaschen 20 aufsitzen.

Die Außenkanten 21 wie die Endkanten 25 verlaufen parallel zu den Längskanten 28. Um ein Verdrehen um die Längsachse des Haltestifts 5 zu vermeiden, befindet sich zwischen den Fußvorspannlaschen 20 ein zwischen die freien Längskanten 28 der Schenkel 12 greifender rechteckiger Zentrieransatz 29, dessen Breite dem lichten Abstand B zwischen den Längskanten 28 angepaßt ist. Dieser Zentrieransatz 29 stellt zugleich eine zuverlässige Führung dar, wenn der Haltestift 5 längs des Haltestegprofils 9 gegen die Reibkraft verschoben werden soll.

Wenn eine Möglichkeit gegeben sein soll, einen Haltestift 5 wieder zu entfernen, wird wenigstens einer der Schenkel 12 über eine Länge und eine Tiefe gekürzt, die das Ausheben wenigstens einer der Fußspreizlaschen 24 ermöglicht, wenn der Haltestift 5 mit dem Fuß 13 an diese Stelle verschoben wird. Wird im übrigen der Haltestift 5 aus anderem Material als der Haltefuß 13 hergestellt, dann ist es zweckmäßig, den Haltestift 5 in den aus elastischen Kunststoff bestehenden Haltefuß 13 beim Herstellungsprozeß einendig einzubetten. Zweckmäßig ist es auch, die über die Isolierung 6 hinausstehenden spitzen Enden der Haltestifte 5 mit Schutzkappen zu bestücken, um einer Verletzungsgefahr zu begegnen.

Bei diesem Aufbau ergeben sich insgesamt auch dadurch Vorteile, daß eine optische und akkustische Kontrolle auf festen Sitz des Haltestifts mit seinem Haltefuß nach dem Anbau möglich ist. Es ergibt sich auch eine mechanische Belastbarkeit und die federnde Lagerung bewirkt eine Endkopplung der Isoliermatten 6 vom Körperschall des Wagenkastens. Zudem entsteht durch den aus schlecht wärmeleitendem Werkstoff hergestellten Haltefuß keine Kältebrücke zum daran festgesetzten Haltestift. Zudem braucht der Haltestift 5 erst dann im Haltestegprofil 9 festgesetzt werden, wenn eine unmittelbar auf die innere Wandfläche 3 aufgebrauchte Isolierschicht angebracht ist. Außerdem ist das nachträgliche Anbringen von Haltestiften bei Bedarf ohne weiteres möglich und der Haltefuß 13 kann nicht nur als Spritzgußteil sondern auch als Abschnitt eines Exdrusionsprofils kostengünstig hergestellt werden.

## Patentansprüche

1. Personenzugwagen mit einem Wandungselement aus Profilplatten (1), insbesondere aus Aluminium, und daran an wenigstens einem Haltestift (5) festgesetzter Isolierschicht (6), vorzugsweise Isoliermatte, dadurch gekennzeichnet, daß an der Profilplatte (1) auf der der Isolierschicht (6) zugewandten Seitenfläche (3) wenigstens ein langgestrecktes Haltestegprofil (9) vorgesehen ist und daß zumindest ein Haltestift (5) auf einem Haltestegprofil (9) festgesetzt ist.

2. Personenzugwagen nach Anspruch 1, dadurch gekennzeichnet, daß das Haltestegprofil (9) einen nach Art eines T oder C gestalteten Querschnitt und der Haltestift (5) einen angepaßten, formschlüssigen damit in Eingriff stehenden Fuß (13) mit angepaßtem Gegenprofil aufweist.

3. Personenzugwagen nach Anspruch 1 oder 2, dadurch gekennzeichnet, daß das Haltestegprofil (9) zwei mit Abstand Parallel zueinander verlaufende Winkelleisten (11) aufweist, deren freie Schenkel (12) voneinander weg oder zueinander hinweisen und daß der Fuß (13) des Haltestifts (5) einen parallel zur Stirnfläche (3) der Profilplatte (1) liegenden Brückensteg (14) mit an gegenüberliegenden Rändern vorgesehenen Winkelstegen (15) aufweist, wobei die freien Schenkel (16) dieser Winkelstege (15) gegengleich zu denen des Haltestegprofils (9) gerichtet sind.

4. Personenzugwagen nach Anspruch 2 oder 3, dadurch gekennzeichnet, daß die freien Schenkel (12,16) des Haltestegprofils (9) und/oder des Haltestiftfußes (13) Anlaufschrägen (17,18) aufweisen.

5. Personenzugwagen nach Anspruch 3 oder 4, dadurch gekennzeichnet, daß die freien Schenkel verformbare Laschen aufweisen, die sich am Haltestegprofil bzw. am Haltestiftfuß elastisch abstützen.

6. Personenzugwagen nach wenigstens einem der Ansprüche 1 bis 5, dadurch gekennzeichnet, daß das Haltestegprofil (9) einstückig mit der Wandprofilplatte (1) verbunden ist.

7. Personenzugwagen nach wenigstens einem der Ansprüche 1 bis 5, dadurch gekennzeichnet, daß das Haltestegprofil (9) an einer separaten Leiste (10) ausgebildet ist, die an der Profilplatte (1) festgesetzt ist.

8. Personenzugwagen nach wenigstens einem der Ansprüche 2 bis 7, dadurch gekennzeichnet, daß der Haltestift (5) mit seinem Fuß (13) einstückig ausgebildet ist.

9. Personenzugwagen nach wenigstens einem der Ansprüche 2 bis 8, dadurch gekennzeichnet, daß der Haltestift (5) mit seinem Fuß (13) aus Kunststoff besteht.

10. Personenzugwagen nach Anspruch 9, dadurch gekennzeichnet, daß der Haltestift (5) mit seinem Fuß (13) aus glasfaserverstärktem Kunststoff besteht.

11. Personenzugwagen nach wenigstens einem der Ansprüche 1 bis 10, dadurch gekennzeichnet, daß das Haltestegprofil (9) C-förmig ausgebildet ist und daß der Haltestift (5) einen pilzförmigen Haltefuß (13) aufweist, der außen auf den aufeinander zuweisenden Schenkein (12) des Haltestegprofils (9) aufsitzende Fußvorspannlaschen (20) aufweist sowie mit einem Fußstiel (23) in das Kaltestegprofil (9) eingreift und dessen Fußstiel (23) Fußspreizlaschen (24) aufweist, die vom Fußstielende zu den Fußvorspannlaschen (20) zurücklaufen und innen an den Schenkeln (12) kraftschlüssig anliegen.

12. Personenzugwagen nach Anspruch 11, dadurch gekennzeichnet, daß die Fußvorspannlaschen (20) zu ihrer freien Außenkante (21) hin zu der die Schenkel (12) aufnehmenden Ebene (27) hin abfallend geneigt sind.

13. Personenzugwagen nach Anspruch 11 oder 12, dadurch gekennzeichnet, daß der Haltefuß (13) zwischen den Fußvorspannlaschen (20) einen zwischen die freien Längskanten (28) der Schenkel (12) greifenden und deren lichten Abstand (B) in der Breite angepaßten Zentrieransatz (29) aufweist.

14. Personenzugwagen nach wenigstens einem der Ansprüche 11 bis 13, dadurch gekennzeichnet, daß die gegenüberliegend an das freie Ende des Fußstiels (23) angesetzten Spreizlaschen (24) unter einem Öffnungswinkel von etwa 15 bis 30 Winkelgraden in Bezug auf die Längsachse des Haltestifts (5) geneigt sind.

15. Personenzugwagen nach wenigstens einem der Ansprüche 11 bis 14, dadurch gekennzeichnet, daß die Fußvorspannlaschen (20) etwa 75 bis 85 Winkelgrade gegenüber der Längsachse des Haltestifts (5) geneigt sind.

16. Personenzugwagen nach wenigstens einem der Ansprüche 11 bis 15, dadurch gekennzeichnet, daß am Haltefuß (13) im uneingebauten Ausgangszustand eine die freien Außenkanten (21) der Fußvorspannlaschen (20) aufnehmende Ebene (27) von einer parallel dazu verlaufenden, die freien Enden (25) der Spreizlaschen (24) aufnehmenden Ebene (26) einen Abstand aufweist, der kleiner als die Dicke der Schenkel (12) des Haltestegprofils (9) ist.

17. Personenzugwagen nach wenigstens einem der Ansprüche 1 bis 16, dadurch gekennzeichnet, daß am Haltestegprofil (9) wenigstens eine Ausfädelstelle vorgesehen ist, an welcher zumindest einer der aufeinander zuweisenden bzw. voneinander wegweisenden Schenkel (12) ausgeschnitten ist.

18. Personenzugwagen nach wenigstens einem der Ansprüche 1 bis 17, dadurch gekennzeichnet, daß der Haltestift (5) in den aus elastischem Kunststoff bestehenden Haltefuß (13) einendig eingebettet ist.

## Claims

1. Railway passenger coach with a wall element of sectional plates (1), in particular of aluminium, and an insulation layer (6), preferably an insulation mat, fixed by one or more retaining pins (5), characterized in that at least one elongated retaining web section (9) is provided on the side surface (3) of the sectional plate (1) facing the insulation layer (6), and that at least one retaining pin (5) is fixed to a retaining web section (9).

2. Railway passenger coach according to claim 1, characterized in that the retaining web section (9) has a cross-section in the form of a T or C shape, and the retaining pin (5) has a matching positively-engaging base (13) with a matching mating profile.

3. Railway passenger coach according to claim 1 or 2, characterized in that the retaining web section (9) has two angle strips (11) running parallel to one another and spaced apart, with their free limbs (12) pointing away from or towards one another, and that the base (13) of the retaining pin (5) has a bridging web (14) lying parallel to the end face (3) of the sectional plate (1), with angle webs (15) provided on opposite edges, wherein the free limbs (16) of these angle webs (15) are aligned diametrically opposite to those of the retaining web section (9).

4. Railway passenger coach according to claim 2 or 3, characterized in that the free limbs (12,16) of the retaining web section (9) and/or the retaining pin base (13) have inclined contact faces (17,18).

5. Railway passenger coach according to claim 3 or 4, characterized in that the free limbs have deformable brackets which rest elastically on the retaining web section or retaining pin base respectively.

6. Railway passenger coach according to at least one of claims 1 to 5, characterized in that the retaining web section (9) is connected in one piece to the wall section plate (1).

7. Railway passenger coach according to at least one of claims 1 to 5, characterized in that the retaining web section (9) is formed on a separate strip (10), which is fixed to the sectional plate (1).

8. Railway passenger coach according to at least one of claims 2 to 7, characterized in that the retaining pin (5) with its base (13) is designed as one piece.

9. Railway passenger coach according to at least one of claims 2 to 8, characterized in that the retaining pin (5) with its base (13) is made of plastic.

10. Railway passenger coach according to claim 9, characterized in that the retaining pin (5) with its base (13) is made of glass-fibre-reinforced plastic.

11. Railway passenger coach according to at least one of claims 1 to 10, characterized in that the retaining web section (9) is C-shaped and that the retaining pin (5) has a mushroom-shaped retaining base (13), which has base prestressing brackets (20) resting on the outside of the facing limbs (12) of the retaining web section (9), and also engages in the retaining web section (9) by a base handle (23), and its base handle (23) has base expanding brackets (24) running back from the base handle end to the base prestressing brackets (20) and on the inside making non-positive contact with the limbs (12).

12. Railway passenger coach according to claim 11, characterized in that the base prestressing brackets (20) are inclined towards their free outer edge (21), falling towards the plane (27) of the limbs (12).

13. Railway passenger coach according to claim 11 or 12, characterized in that between the base prestressing brackets (20) the retaining base (13) has a spigot (29) engaging between the free longitudinal edges (28) of the limbs (12) and with a width matched to the clearance (B) between them.

14. Railway passenger coach according to at least one of claims 11 to 13, characterized in that the opposing expanding brackets (24) attached at the free end of the base handle (23) are inclined at an opening angle of around 15 to 30 angular degrees relative to the longitudinal axis of the retaining pin (5).

15. Railway passenger coach according to at least one of claims 11 to 14, characterized in that the base prestressing brackets (20) are inclined at around 75 to 85 angular degrees relative to the longitudinal axis of the retaining pin (5).

16. Railway passenger coach according to at least one of claims 11 to 15, characterized in that, on the retaining base (13) in its original unfitted state, a plane (27) covering the free outer edges (21) of the base prestressing brackets (20) is at a distance from a parallel plane (26) covering the free ends (25) of the expanding brackets (24), which is less than the thickness of the limbs (12) of the retaining web section (9).

17. Railway passenger coach according to at least one of claims 1 to 16, characterized in that the retaining web section (9) is provided with one or more disengaging points, at which is cut out at least one of the limbs (12) which face towards or away from one another.

18. Railway passenger coach according to at least one of claims 1 to 17, characterized in that the retaining pin (5) is embedded at one end in the retaining base (13) made of flexible plastic.

## Revendications

1. Voiture d'un train de voyageurs, comportant un élément de paroi en plaques profilées (1), en particulier en aluminium, et contre cet élément une couche isolante (6), fixée à au moins une goupille d'arrêt (5), de préférence un mat isolant caractérisée en ce qu'au moins un profil (9) de traverse d'arrêt est prévu contre la plaque profilée (1) sur la face latérale (3) dirigée vers la couche isolante (6), et qu'au moins une goupille d'arrêt (5) est fixée sur le profil (9) de traverse d'arrêt

2. Voiture d'un train de voyageurs selon la revendication 1, caractérisée en ce que le profil (9) de traverse d'arrêt a une section transversale ayant la forme d'un T ou d'un C, et la goupille d'arrêt (5) comporte un pied (13) correspondant qui y est lié par une liaison avec correspondance de forme et qui présente un contre-profil correspondant

3. Voiture d'un train de voyageurs selon la revendication 1 ou 2, caractérisée en ce que le profil (9) de traverse d'arrêt comporte deux baguettes cornières (11), courant parallèlement l'une de l'autre à une certaine distance, dont les branches libres (12) sont dirigées l'une vers l'autre, ou en sens opposé, et que le pied (13) de la goupille d'arrêt (5) comporte une traverse en pont (14), disposée parallèlement à la face frontale (3) de la plaque profilée (1), laquelle traverse en pont comporte des traverses en cornière (15), prévues sur les bords opposés, les branches libres (16) de ces traverses en cornière (15) étant dirigées vers celles du profil (9) de traverse d'arrêt en y étant diamétralement opposées.

4. Voiture d'un train de voyageurs selon la revendication 2 ou 3, caractérisée en ce que les branches libres (12, 16) du profil (9) de traverse d'arrêt et/ou du pied (13) de la goupille d'arrêt comportent des chanfreins d'attaque (17, 18).

5. Voiture d'un train de voyageurs selon la revendication 3 ou 4, caractérisée en ce que les branches libres comportent des éclisses déformables, qui s'appuient par un appui élastique sur le profil de traverse d'appui ou contre le pied de la goupille d'arrêt.

6. Voiture d'un train de voyageurs selon au moins l'une des revendications 1 à 5, caractérisée en ce que le profil (9) de traverse d'arrêt est relié d'une manière monobloc à la plaque profilée de paroi (1).

7. Voiture d'un train de voyageurs selon au moins l'une des revendications 1 à 5, caractérisée en ce que le profil (9) de traverse d'arrêt est constitué d'une baguette distincte (10), qui est fixée à la plaque profilée (1).

8. Voiture d'un train de voyageurs selon au moins l'une des revendications 2 à 7, caractérisée en ce que la goupille d'arrêt (5) est configurée d'une manière monobloc avec son pied (13).

9. Voiture d'un train de voyageurs selon au moins l'une des revendications 2 à 8, caractérisée en ce que la goupille d'arrêt (5) est, avec son pied (13), constituée d'un matériau plastique.

10. Voiture d'un train de voyageurs selon la revendication 9, caractérisée en ce que la goupille d'arrêt (5) est, avec son pied (13), constituée d'un matériau plastique renforcé par des fibres de verre.

11. Voiture d'un train de voyageurs selon au moins l'une des revendications 1 à 10, caractérisée en ce que le profil (9) de traverse d'arrêt a la forme d'un C, et que la goupille d'arrêt (5) comporte un pied d'arrêt (13) en forme de champignon, qui comporte des éclisses (20) de précontrainte du pied, qui s'appuient à l'extérieur sur les branches (12), en regard l'une de l'autre, du profil (9) de traverse d'arrêt, et qui avec une tige (23) du pied entre en prise avec le profil (9) de traverse d'arrêt, et dont la tige de pied (23) comporte des éclisses (24) d'écartement du pied, qui vont de l'extrémité de la tige du pied aux éclisses (20) de précontrainte du pied, et qui à l'intérieur s'appuient contre les branches (12) par une liaison avec correspondance de forme.

12. Voiture d'un train de voyageurs selon la revendication 11, caractérisée en ce que les éclisses (20) de précontrainte du pied sont inclinées, vers leur arête extérieure libre (21), en descendant vers le plan (27) dans lequel se trouvent les branches (12).

13. Voiture d'un train de voyageurs selon la reven-dication 11 ou 12, caractérisée en ce que le pied d'arrêt (13) comporte, entre les éclisses (20) de précontrainte du pied, un épaulement de centrage (29), qui pénètre entre les arêtes longitudinales libres (28) des branches (12), et dont la largeur est adaptée à leur écartement (B).

14. Voiture d'un train de voyageurs selon au moins l'une des revendications 11 à 13, caractérisée en ce que les éclisses d'écartement (24), rapportées opposées l'une à l'autre à l'extrémité libre de la tige de pied (23), sont inclinées selon un angle d'ouverture d'environ 15 à 30 degrés d'angle par rapport à l'axe longitudinal de la goupille d'arrêt (5).

15. Voiture d'un train de voyageurs selon au moins l'une des revendications 11 à 14, caractérisée en ce que les éclisses (20) de précontrainte du pied sont inclinées d'environ 75 à 85 degrés d'angle par rapport à l'axe longitudinal de la goupille d'arrêt (5).

16. Voiture d'un train de voyageurs selon au moins l'une des revendications 11 à 15, caractérisée en ce que, au niveau du pied d'arrêt (13), dans l'état initial avant montage, un plan (27), dans lequel se trouvent les arêtes extérieures libres (21) des éclisses (20) de précontrainte du pied, présente par rapport à un plan (26), parallèle au premier, dans lequel se trouvent les extrémités libres (25) des éclisses d'écartement (24), une distance qui est inférieure à l'épaisseur des branches (12) du profilé (9) de traverse d'arrêt.

17. Voiture d'un train de voyageurs selon au moins l'une des revendications 1 à 16, caractérisée en ce qu'on prévoit, au niveau du profit (9) de traverse d'arrêt, au moins un point de sortie, au niveau duquel est découpée au moins l'une des branches (12), en regard l'une de l'autre ou opposées l'une à l'autre.

18. Voiture d'un train de voyageurs selon au moins l'une des revendications 1 à 17, caractérisée en ce que la goupille d'arrêt (5) est encastrée par une extrémité dans le pied d'arrêt (13), constitué d'un matériau plastique élastique.
